Europäisches Patentamt

European Patent Office

Office européen des brevets

(19)

(11) Numéro de publication: **0 077 724**
**B1**

## (12) FASCICULE DE BREVET EUROPEEN

(45) Date de publication du fascicule du brevet:
05.02.86

(51) Int. Cl.⁴: **G 01 N 27/12**

(21) Numéro de dépôt: **82401878.2**

(22) Date de dépôt: **13.10.82**

(54) Procédé, capteur et dispositif de détection de traces de gaz dans un milieu gazeux.

(30) Priorité: **16.10.81 FR 8119536**

(43) Date de publication de la demande:
**27.04.83 Bulletin 83/17**

(45) Mention de la délivrance du brevet:
**05.02.86 Bulletin 86/6**

(84) Etats contractants désignés:
**DE GB IT NL SE**

(56) Documents cités:
**EP - A - 0 075 101**
**FR - A - 2 287 697**
**FR - A - 2 304 080**
**GB - A - 1 474 080**
**GB - A - 2 002 124**
**US - A - 4 169 369**
**US - A - 4 250 737**

(73) Titulaire: **ASSOCIATION POUR LA RECHERCHE ET LE DEVELOPPEMENT DES METHODES ET PROCESSUS INDUSTRIELS (ARMINES), 60, Boulevard Saint-Michel, F-75272 Paris Cédex 06 (FR)**

(72) Inventeur: **Lalauze, René, 26, rue Eugène Joly, F-42100 Saint-Etienne (Loire) (FR)**
Inventeur: **Pijolat, Christophe, 8 Rue Malesherbes, 69006 Lyon (Rhône) (FR)**
Inventeur: **Couput, Jean-Paul, Rue Borde Debat, 64000 Pau (Pyrénées-Atlantiques) (FR)**

(74) Mandataire: **Chevallier, Robert Marie Georges, Cabinet BOETTCHER 23, rue La Boétie, F-75008 Paris (FR)**

LIBER, STOCKHOLM 1986

## Description

L'invention concerne un procédé de fabrication d'un capteur pour le détection dans un milieu gazeux ou dans une atmosphère surveillée de traces de gaz ou d'impuretés gazeuses. L'invention concerne également un capteur destiné à detétecter lesdites traces de gaz ou lesdites impuretés de gaz. De plus, l'invention concerne des procédés de détection de traces ou impuretés gazeuses ainsi que des dispositifs pour la mise en oeuvre desdits procédés.

On connaît les propriétés de semi-conduction de certains oxydes métalliques, dont la conductivité électrique varie en fonction de la température et de la présence de certains gaz. Ces propriétés ont été utilisées dans la détection de traces ou d'impuretés gazeuses. Les oxydes utilisés à cet effet sont généralement l'oxyde d'étain $SnO_2$ et l'oxyde de nickel NiO utilisés soit à l'état cristallin, soit en couche déposée sur un support en céramique, soit en pastilles de poudre frittée. Des applications de ce type sont décrites notamment dans les brevets US-A-3 625.756, US-A- 3 900.815 et US-A- 4 039.941.

Mais la conductivité de ces oxydes est variable en fonction d'un grand nombre de gaz, de sorte que leur utilisation comme capteur de détection ne permet pas une grande fiabilité faute de caractère spécifique ou sélectif.

Généralement, les oxydes semi-conducteurs ont une conductivité électrique o qui varie avec la température, avec la nature et la pression des gaz qui composent le milieu ambiant.
- σ croit de façon exponentielle avec la température,
- le sens de variation de o est lié à la nature du gaz,
- l'amplitude dépend de la pression partielle des gaz et de la composition de la phase gazeuse.

La chimisorption d'un gaz par un oxyde semiconducteur, se traduit par un transfert d'électrons entre le gaz et l'oxyde. Selon que le gaz g a une affinité électronique supérieure ou inférieure à celle de l'oxyde s, il y a respectivement un transfert d'électrons du solide vers le gaz (s+-g-) ou du gaz vers le solide (s--g+). Ce transfert contri bue à augmenter ou à diminuer le nombre de ponteurs libresmajoritaires dans le solide. Le sens d'une telle variation est défini par le type de liaison )g+-s- ou g--s+) et par la nature des porteurs majoritaires, c'est-à-dire des électrons pour les semi-conducteurs de type n et des lacunes d'électrons pour les semi-conducteurs de type p.

On sait que la conductance électrique G d'un semiconducteur est sensiblement proportionnelle au nombre de porteurs majoritaires. En conséquence, la présence d'un gaz fait varier la conductance du semi-conducteur selon que le gaz adsorbé prend ou cède des électrons au semi-conducteur.

On dit alors qu'il est respectivement accepteur ou donneur d'électrons.

Si le gaz est accepteur et si l'oxyde métallique semi-conducteur est de type n, le gaz prend un électron au solide qui voit sa conductance diminuer. En revanche, si le gaz est accepteur et si l'oxyde métallique semi-conducteur est de type p, le gaz prend un électron au solide, qui voit sa conductance augmenter.

Si le gaz est donneur, le sens des variations électriques observé sera l'inverse de ce qui vient d'être dit. En d'autres termes, pour un gaz donné, on observe toujours une variation de la conductivité en fonction de la concentration de ce gaz. Il suffit alors de mesurer cette variation pour détecter la présence de ce gaz. Les capteurs qui sont actuellement utilisés selon ce principe sont assez sensibles en pratique, mais ils présentent l'inconvénient majeur de donner une réponse électrique qui ne permet pas de détecter sélectivement ou spécifiquement un gaz donné dans un mélange.

Le document US-A- 4 169 369 décrit un détecteur à film mince en oxyde d'étain qui est chauffé entre 100° et 600°C, dans l'air, avant son utilisation, afin de le stabiliser. Ce détecteur est employé ensuite à une température de 150° à 300°C dans une atmosphere à contrôler, mais il n'est sensible qu'aux gaz de formule $NO_x$.

Le document GB-A- 1 474 080 se rapporte a un appareil de détection comprenant une pluralité de détecteurs à base d'oxyde métallique semi-conducteur ayant des sensibilites différentes aux différents composants gazeux d'une atmosphère à contrôler; le montage, soit en série, soit en parallèle, soit en pont de ces éléments permet de mesurer des tensions de sortie différentes selon que l'atmosphère contrôlée contient tel ou tel composant gazeux. Les détecteurs peuvent être portés à destempératures différentes l'une de l'autre Dans ce document, ne sont donnes comme exemples de gaz détectables que l'air pur, l'hydrogène, le propane, l'isobutane et le methane; la sensibilité de l'appareil n'est pas précisée.

Le document EP-A- 75 101 déposé avant mais publié après la date de priorité de l'invention decrit un appareil de détection comprenant un détecteur à base d'oxyde métallique semi-conducteur conçu pour signaler la présence dans une atmosphere de l'un ou l'autre de deux gaz, nommément l'oxyde de carbone CO et la vapeur d'essence. Le fonctionnement de cet appareil repose sur le fait que la conductivité électrique en fonction de la température du détecteur utilisé se représente pour les deux gaz par deux courbes en pic de hauteurs différentes en ordonnées et déportées en abscisses en se coupant l'une l'autre à une valeur donnée de la température. Si on élève et si on abaisse la température de l'élément par rapport à cette valeur donnée, on observe une conductivité plus grande ou plus faible selon que l'un ou l'autre des gaz est present et que, par conséquent, l'une ou l'autre des courbes entre en jeu. Avec cet appareil, la position du point de mesure qui correspond au sommet des courbes n'a pas de signification particulière et n'est pas utilisée spécialement.

Le but de l'invention est de proposer un nouveau procede de fabrication d'un capteur, le capteur obtenu par ce procédé, un nouveau procédé de détection d'un gaz dans une atmosphère, et un nouveau dispositif réunissant les avantages de la sélectivité des gaz à détecter et d'une très grande sensibilite.

Selon l'invention, ce but est par un procédé de fabrication tel que défini à la revendication 1, par les procédés définis aux revendications 5 et 6, par les dispositifs définis aux revendications 9 et 10 et par le capteur défini à la revendication 12.

L'invention, qui sera decrite plus loin, repose sur la découverte d'un traitement approprié qui confère aux oxydes semi-conducteures précités des caractéristiques de conductivité électrique tout à fait nouvelles conduisant à une détection vraiment sélective de tel ou tel gaz ou de tel ou te groupe de gaz.

C'est en partant de la mise au point d'un capteur spécifique du benzène que les inventeurs ont constaté que certains capteurs présentaient un pic vers 400°C sur la courbe $G = f(T)$ sous atmosphere de benzene ($G$ = conductance, $T$ = température) et ce, dès 0,001 % ou moins, c'est-à-dire tres au-dessous du seuil de toxicité qui est de 0,0035 %. Parmi ces capreurs, les uns étaient en poudre frittée d'oxyde, les autres etaient obtenus par dépôt d'une poudre d'oxyde sur un support céramique. C'est de l'examen critique des résultats obtenus et d'essais systématiques que les inventeurs ont pu établir :

1°/ que le pic se déplace vers les hautes temperatures et diminue en intensité jusqu'à disparaître completement si on porte le capteur à une température trop élevée, de l'ordre de 550°C ,

2°/ que le pic n'apparaît que si le capteur a été exposé à $SO_2$ ou $H_2S$. Un tel traitement est irréversible sauf si on sature le capteur par un traitement de plusieurs heures, par exemple.

C'est cette double leçon qu'on retrouve donc appliquée dans la caractéristique essentielle de l'invention.

Il convient cependant de relever l'influence de l'eau absorbée par le capteur, cette eau produisant vers 250°C un pic anormal en cas de montée en température sous air humide, ainsi qu'un plateau au niveau du pic vers 400°C lors des descentes en température. Cependant, de telles conditions d'humidité sont rarement reproduites en condition normale d'exploitation.

Selon un mode de réalisation préféré, on fabrique le capteur par frittage de l'oxyde métallique de la façon connue en soi. Ce mode de fabrication est préféré parce qu'il facilite un contact sûr avec les électrodes d'alimentation et de mesure et parce qu'il facilite aussi l'usinage du capteur.

Selon un autre mode de réalisation de l'invention, le flux gazeux est constitué par de l'air ou un gaz neutre contenant le gaz activant à une concentration de 0,1 % environ. La durée de traitement du capteur par le flux gazeux contenant le gaz activant est de l'ordre de 30 s à 5 min, de préférence 3 min environ. Dans les procédés de détection définis aux revendications 5 et 6, les deux températures peuvent avoir un écart de l'ordre de 100°C, la plus basse des deux etant d'environ : 100°C pour $H_2S$, 200°C pour $SO_2$, 400°C pour le benzène, 250° à 275°C pour le tétrachlorure de carbone, le diéthylether, l'acétate de butyle, le butanol, l'acétaldéhyde, 300° à 325°C pour le toluène, le chloroforme, 325° à 350°C pour l'hexane, 375°C pour le cyclohexane.

Les caractéristiques des procédés de détection selon l'invention sont basées sur l'observation de pics de conductivité spécifique du ou des gaz designés à la plus basse des deux températures.

On voit, par ces caractéristiques, qu'il est possible de détecter sélectivement soit $H_2S$, soit $SO_2$, soit un hydrocarbure ou un dérivé toxique du groupe désigné. Dans l'hypothèse où le gaz analysé est l'un des gaz désignés et quand on opère aux deux températures comme expliqué ci-dessus, le capteur qui travaille ü la plus basse température, c'est-à-dire au voisinage du pic précédemment évoqué, fournit un signal électrique supérieur à celui qui est délivré par le capteur travaillant à la plus haute température, alors qu'en l'absence de ce gaz le signal électrique varie comme la température.

Pour l'exécution d'une mesure de détection emploie selon l'invention un disposit if qui comprend un capteur fabriqué selon le procédé défini plus haut, des moyens d'alimentation de ce capteur en courant électrique, des moyens de mesure d'une caractéristique électrique de l'elément sensible du capteur représentative de la conductivité de cet élément, un four dans lequel le capteur est logé, des moyens d'introduction dans le four et d'évacuation d'une partie de l'atmosphère à surveiller, des moyens de réglage de la température du four, lesquels moyens etant aptes à porter le capteur a deux températures successives dont l'une correspond environ au pic se manifestant dans la relation entre la température et la conductivité en présence du gaz à détecter et dont l'autre est plus élevée, des moyens de memorisation pour mémoriser l'une au moins des deux valeurs de ladite caractéristique électrique obtenues à chacune des deux températures, et des moyens de comparaison desdites deux valeurs.

Selon une variante de réalisation, le dispositif de mesure comprend un premier ensemble constitué par un capteur fabriqué selon le procédé défini plus haut, des moyens d'alimentation du capteur en courant électrique, des moyens de mesure d'une caractéristique electrique de l'élément sensible du capteur représentative de la conductivité de cet élément, un four des moyens dans lequel le capteur est logé, des moyens d'introduction dans le four et d'évacuation d'une partie de l'atmosphère à surveiller, des moyens de réglage de la température du four, à une valeur prédéterminée, un deuxieme ensemble identique au premier ensemble, les moyens de réglage de la temperature de l'un des ensembles etant capables de porter le capteur associé à une premiere température correspondant environ au pic se manifestant dans la relation entre la temperature et la conductivité en presence du gaz à detecter, et les moyens de réglage de l'autre des ensembles étant capables de porter le capteur associe a une seconde température plus élevée ue la première, et des moyens de comparaison pour comparer les deux valeurs de la caractéristique électrique des capteurs desdits ensembles à la première et seconde température.

Avantageusement, les deux fours avec leurs capteurs sont disposés dans une enceinte unique comportant les moyens d'introduction et d'évacuation d'une partie de l'atmosphère surveillée.

D'autres caractéristiques et avantages ressortiront de la description qui sera donnée ci-après sans intention limitative uniquement à titre d'exemple d'un mode de réalisation de l'invention. On se reportera aux dessins annexés dans lesquels:
- la figure 1 est une vue en coupe schématique très agrandie d'un capteur de l'invention,
- la figure 2 est une vue analogue à la figure 1 d'une variante du meme capteur,
- la figure 3 est un graphique montrant la variation de la conductance d'un capteur de l'invention en fonction de la température pour certaines compositions gazeuses,
- la figure 4 est un graphique montrant la variation de la conductance d'un capteur de l'invention en fonction de la température à diverses concentrations de benzène dans l'air,
- la figure 5 est un graphique montrant la variation de conductance d'un capteur de l'invention en fonction de la température dans de l'air pur, et dans de l'air contenant des impuretés détectables,
- la figure 6 est un dessin schématique d'un appareil de détection conforme à l'invention.

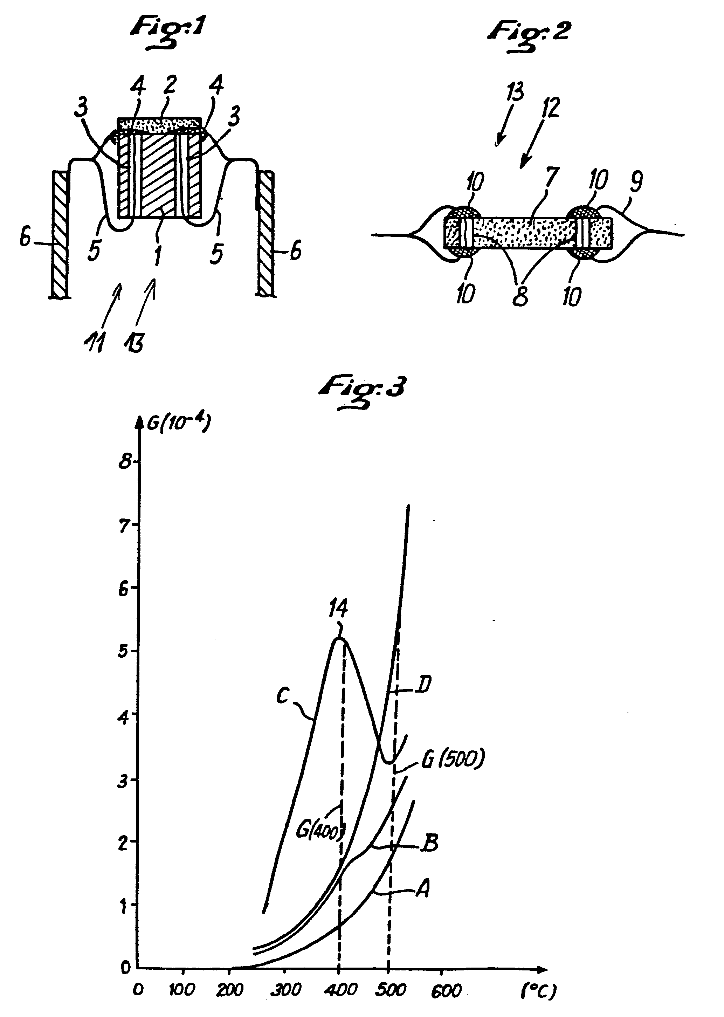

Les fig. 1 et 2 représentent en fort agrandissement deux capteurs conformes à l'invention.

Sur la fig. 1 un support 1 en alumine est recouvert d'une couche 2 de 1 mm environ d'épaisseur d'une poudre de $SnO_2$ ou de NiO déposée à l'aide d'une suspension dans de l'éthanol. Le support en alumine est percé de part en part de deux trous 3 débouchant sous la couche 2. Deux joints de contact 4 en pâte d'or assurent chacun le contact avec un de deux fils de contact 5 en platine montés en boucles et reliés chacun à une électrode 6. Ce capteur 11 est soumis avant sa mise en service pendant 30 s. à 5 min de préférence 3 min, à un courant d'air contenant 0,1 % de $SO_2$ ou $H_2$, à une température de 550°C.

Sur la figure 2, on a représenté un capteur fabriqué selon un mode de réalisation préféré, par frittage. A partir d'une poudre de $SnO_2$ ou de NiO de 50 à 100 μm on a réalisé une pastille sous une pression de 2 t pendant une minute à la température ambiante. La pastille ainsi obtenue a été portée à 500°C pendant 10 minutes, après quoi, elle a été soumise à la même température de 500°C à un flux d'air contenant 0,1 % de $SO_2$ ou $H_2S$, pendant une durée de 30 s à 5 min, de préférence 3 min. On a obtenu ainsi une pastille 7, frittée et accivée, qui a été percée de part en part pour avoir deux trous 8, servant chacun au passage d'un fil de contact 9 mis en boucle et scellé de chaque côté du trou 8 par un peu de pâte d'or 10.

L'un et l'autre procédé permettent d'obtenir un capteur 11 ou 12, que, dans la suite de la description, on appellera sans autre distinction 'capteur 13'; la différence entre les deux n'est pas fonctionnelle, mais se traduit par leur tenue à l'usure qui est meilleure pour le capteur fritté 12.

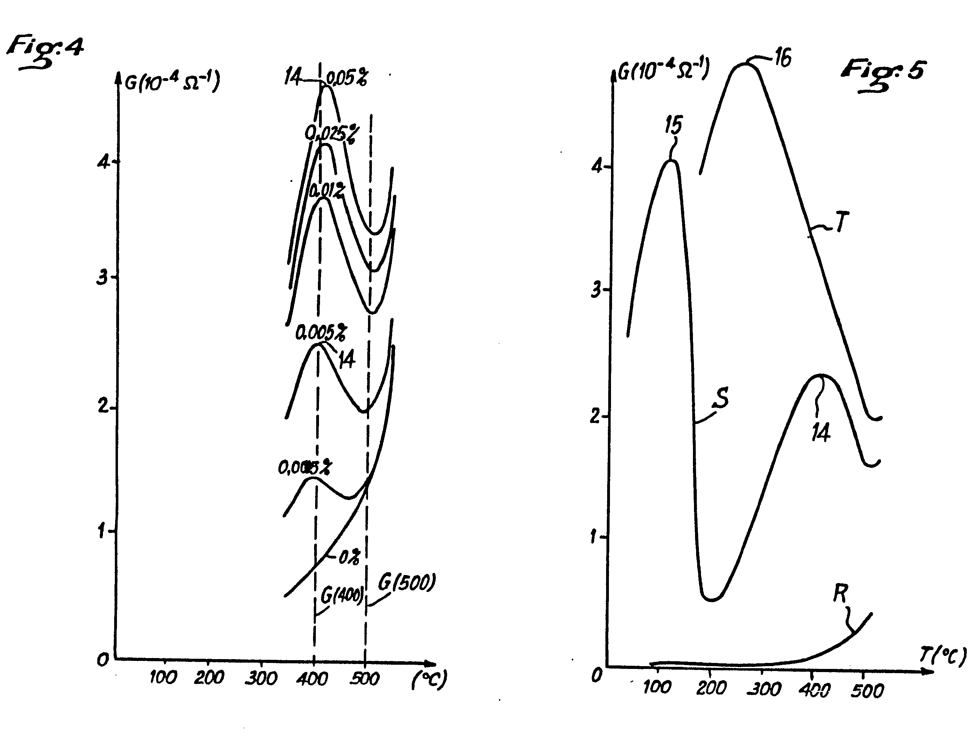

On expliquera maintenant le comportement du capteur de l'invention, en présence du benzène et d'autres gaz, en se reférant à la fig. 3, sun laquelle on a représenté en abcisses la températune en °C à laquelle est portée le capteur et en ordonnées sa conductance G exprimée en $10^{-4}\ \Omega^{-1}$. La courbe A représente la relation entre conductance et température dans le cas où un capteur activé est exposé à de l'air pur. La courbe B représente la même relation pour un capteur non activé (hors invention) exposé à de l'air contenant 0,01 % de benzène, tandis que la courbe C se rapporte à un capteur activé de l'invention exposé à de l'air contenant 0,012 % de benzène. La courbe D est relative au capteur de l'invention exposé à de l'air contenant 0,04 % de $CH_4$. La présence de benzène donne à la courbe du capteur de l'invention, un pic caractéristique 14 aux environsde 400°C. Le procédé de l'invention consiste à utiliser cette propriété et à mesurer G(500) - G(400) qui a une valeur positive en l'absence de benzène et négative en présence de benzène. En se reportant à la fig. 4, on voit que l'écart G(500) - G(400) varie de façon significative en fonction du pourcentage de benzène dans la gamme représentée de sa concentration entre 0 % et 0,05 % ; on observe à la fois un pic 14 de la valeur G croissant avec la teneur en benzène et un écart négatif croissant en valeur absolue entre G(500) et G(400).

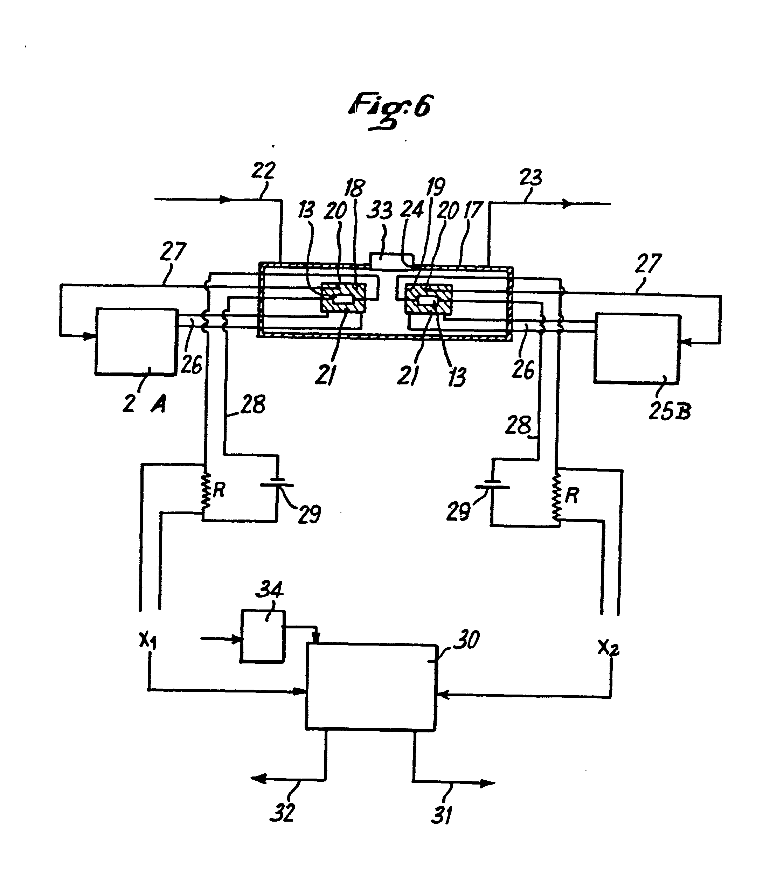

Sur la fig. 5 on a représenté, avec les mémes coordonnées que sur la fig. 4, et pour un capteur de l'invention activé avec $SO_2$, la courbe R obtenue avec de l'air pur, la courbe S obtenue avec de l'air à 0,004 % $H_2S$ et 0,1 % benzène. On y retrouve le pic 14 à environ 400°C (pic caractéristique du benzène) et un pic 15 à environ 100°C (pic caractéristique d'$H_2S$). La courbe T montue un pic 16 qui correspond à de l'air contenant 0,1 % de $SO_2$.

D'autres essais ont permis d'établir un catalogue des pics caractéristiques de la plupart des gaz ou vapeurs classés toxiques, tels que cités ci-après avec indication de leur seuil de toxicité en %:

Tétrachlorure de carbone (0,005) : 250 à 275°C environ
Toluène (0,02) : 300 à 325°C '
Chloroforme (0,01) : 300 à 325°C '
Acétate de butyle(0,02) : 250°C '
Diéthyléther (0,04) : 250 à 275°C'
Méthyléthylcétone : 250 à 275°C '
Hexane (0,05) : 325 à 350°C '
Butanol (0,005) : 250 à 275°C '
Acétaldéhyde (0,02) : 275°C '
Cyclohexane (0,04) : 375°C '

Pour tous ces produits le pic apparaît en-dessous du seuil de toxicité.

En outre, on a pu observer aussi un pic avec les hydrocarbures suivants :

Pentane : 400°C environ
Butane : 425°C '
Ethylène : 425°C '

On voit par ce qui précède, qu'il est désormais possible de détecter de façon sélective, soit le benzène seul, soit des groupes choisis de produits toxiques en mesurant la conductance d'un capteur à la température du pic et celle de l'autre capteur à une température nettement supérieure, soit d'environ 100°C, puis en les comparant.

On comprendra mieux le fonctionnement et le mode d'emploi de l'appareil de l'invention que l'on décrira maintenant en se reportant à la fig. 6.

Un appareil selon l'invention comprend une enceinte 17, dans laquelle sont disposés deux fours 18 et 19 contenant chacun un capteur 13 de l'invention. Les capteurs 13, s'ils sont du type fritté, sont meulés jusqu'à atteindre une taille de 2 x 5 mm environ. Les fours 18 et 19 sont cylindriques (longueur : 20 mm; diamètre : 8 mm). Ils sont réalisés par bobinage et un fil de Kanthal (de diamètre 0,1 mm) sur un tube de quartz. Une tresse d'amiante permet de bien séparer les spires. Le tout est enrobé de ciment réfractaire. Un thermocouple 20 est encastré dans le ciment de façon à permettre de contrôler la température du four 18 ou 19. On dispose ainsi de véritables têtes de mesure 21 d'encombrement assez réduit. Les deux têtes 21 sont montées dans l'enceinte 17 comportant une arrivée 22 et une sortie 23 de gaz en circulation ; une fenêtre 24 permettant l'adaptation d'un bouchon fritté métallique 33 pour permettre de surveiller directement l'atmosphère ambiante par diffusion . Les fours sont alimentés au moyen de transformateurs règlables à une fraction de 220 V alternatifs Avec une dizaine de spires, on atteint facilement les deux températures, par exemple de 400 et 500°C, à environ 30 volts et 0,4 Ampère. Le chauffage des fours 18 et 19 est assuré par des alimentations électriques, respectivement 25A et 25B, et par des lignes 26, chaque alimentation électrique étant régulée par une liaison 27 établie avec le thermocouple convenable 20.

Les bornes 6 ou 9 des capteurs sont reliées par des circuits 28 à un circuit de mesure alimenté par une source 29 et comportant une résistance R aux bornes de laquelle on recueille un signal, respectivement $X_1$ pour le four 18, $X_2$ pour le four 19 ; chaque signal est proportionnel à la conductance G du capteur associé. Les signaux $X_1$ et $X_2$ sont envoyés à un comparateur 30 discriminateur de sens. Le comparateur 30 est raccordé d'une part, à un circuit d'alarm 31, d'autre part à un circuit de mesure 32 de $X_1 - X_2$.

Le mode d'emploi de l'appareil est simple.

On règle la température d'un four (18 par exemple) au voisinage de la température d'apparition connue du pic caractéristique du gaz ou famille de gaz à détecter de façon sélective. On règle la température de l'autre four 19 à 100°C environ de plus que le premier four 18. On fait passer en continu dans l'enceinte une partie pulsée de l'atmosphère à surveiller, ou bien on place l'enceinte 17 dans l'atmosphère en laissant la diffusion s'opérer à travers la fenétre 24. Si le gaz à detecter est présent au-dessus de son seuil de détection, qui est très bas (0,015 % pour le benzène, dont le seuil de toxicité est de 0,035 %), le sens du signal $X_1 - X_2$, qui était négatif jusque là (voir fig. 4) devient positif, ce qui provoque l'intervention du dispositif comparateur 30. Ce dernier peut, au choix de l'utilisateur, déclencher une alarme à partir d'un certain seuil et/ou enregistrer et/ou afficher la grandeur de la différence $X_1 - X_2$.

On comprend qu'il est également possible, pour les cas de variations lentes de teneurs nocives, d'utiliser un seul capteur en le portant successivement à la température du pic et à 100°C de plus, à condition de mettre dans un dispositif à mémoire 34 la grandeur $X_1$ et de l'envoyer au comparateur 30 seulement lorsque la grandeur $X_2$ est mesurée.

On ne sortira pas non plus du champ de l'invention en disposant plus de deux capteurs pour détecter sélectivement deux gaz ou familles de gaz à pics caractéristiques se présentant à des températures différentes.

L'invention n'impose rien et ne limite rien en ce qui concerne la réalisation matérielle du capteur composé d'un support de préférence en céramique recouvert d'une couche de l'oxyde approprié. Il est apparu qu'une mince couche de plusieurs dizaines à plusieurs centaines d'Angströms convient de même qu'une couche plus épaisse.

## Revendications:

1. Procédé de fabrication d'un capteur pour la détection, dans une atmosphère à surveiller, de traces ou impuretés gazeuses par mesure de la conductivité électrique d'un élément sensible (2, 7) du capteur (11, 12, 13), selon lequel on réalise l'élément sensible en oxyde métallique du groupe constitué par $SnO_2$ et $NiO$, et selon lequel on soumet l'élément sensible réalisé, avant sa mise en service, à une température élevée, caracterisé en ce que température élevée est au plus égale à 550°C environ, et en ce qu'on expose l'élément sensible réalisé avant sa mise en service, et à la meme température élevée au plus egale à 550°C, à un flux gazeux contenant un gaz activant du groupe constitué par $SO_2$ et $H_2S$.

2. Procédé selon la revendication 1 caractérisé en ce qu'on fabrique le capteur (11,12,13) par frittage de l'oxyde métallique ou par recouvrement en couche mince ou épaisse sur un support céramique.

3. Procédé selon la revendication 1 caractérisé en ce que le flux gazeux est de l'air ou un gaz neutre contenant le gaz activant à une concentration de 0,1% environ.

4. Procédé selon la revendication 1 caractérisé en ce que la durée de traitement du capteur (11,12,13) en oxyde métallique par le flux gazeux contenant le gaz activant est de l'ordre de 30 s à 5 min, de préférence de l'ordre de 3 min.

5. Procédé de détection, dans une atmosphère à surveiller, de traces ou impuretés gazeuses par mesure de la conductivité électrique de l'élément sensible (2, 7) d'un capteur (11, 12, 13) fabriqué selon le procédé défini à l'une quelconque des revendications 1 à 4, procédé de détection selon lequel on porte le capteur, tandis qu'on l'expose à l'atmosphère surveillée, tout d'abord à une première température correspondant environ au pic se manifestant dans la relation entre la température et la conductivité de l'élément sensible en presence du gaz à détecter, et ensuite à une seconde température plus élevée que la première, et selon lequel on mesure le sens

## 0 077 724

et, de preference, également l'ecart des valeurs respectives de la conductivité à la première et seconde temperature.

6. Procédé de détection, dans une atmosphère à surveiller, de traces ou impuretés gazeuses par mesure de la conductivité électrique des éléments sensibles (2, 7) de deux capteurs (13) dont chacun a été fabriqué selon le procédé défini à l'une quelconque des revendications 1 à 4, procédé de détection selon lequel on expose lesdits éléments sensibles à l'atmosphère à surveiller, on porte l'un des capteurs à une première température correspondant environ au pic se manifestant dans la relation entre la température et la conductivité des éléments sensibles en présence du gaz à détecter, et l'autre des capteurs à une seconde température plus élevée que la première, et on mesure le sens et, de préférence, également l'écart des valeurs respectives de la conductivité desdits éléments sensibles à ladite première et seconde température.

7. Procédé selon la revendication 6 caractérisé en ce qu'on utilise deux capteurs (13) en oxyde métallique identiques et on les porte simultanément l'un à l'une des températures, l'autre à l'autre température.

8. Procédé selon l'une quelconque des revendications 5 à 7 caractérisé en ce que les deux températures ont un écart de l'ordre de 100°C, la plus basse des deux étant d'environ : 100°C pour H$_2$S, 200°C pour SO$_2$; 400°C pour le benzène, le pentane, 250° à 275°C.pour le tétrachlorure de carbone, le diéthyléther, l'acétate de butyle, le butanol, l'acétaldéhyde, 300° à 325°C pour le toluène, le chloroforme, 325 à 350°C pour l'hexane, 375°C pour le cyclohexane, 425°C pour le butane, l'éthyláne.

9. Dispositif pour la mise en oeuvre du procédé selon la revendication 5 comprenant :
   - un capteur (13) fabriqué selon le procédé défini à l'une quelconque des revendications 1 à 4,
   - des moyens (28, 29) d'alimentation de ce capteur en courant électrique,
   - des moyens de mesure (R) d'une caractéristique electrique de l'élément sensible du capteur représentative de la conductivité de cet élément,
   - un four (18, 19) dans lequel le capteur est logé,
   - des moyens (22, 23, 24, 33) d'introduction dans le four et d'évacuation d'une partie de l'atmosphère à surveiller,
   - des moyens de réglage (20, 24 - 27) de la température du four, lesquels moyens étant aptes à porter le capteur à deux températures successives dont l'une correspond environ au pic se manifestant dans la relation entre la température et la conductivité en présence du gaz à détecter et dont l'autre est plus élevée,
   - des moyens de mémorisation (34) pour mémoriser l'une au moins des deux valeurs de ladite caractéristique électrique obtenues à chacune des deux températures,
   - des moyens de comparaison (30) desdites deux valeurs.

10. Dispositif pour la mise en oeuvre du procédé selon la revendication 6 comprenant :
   - un premier ensemble constitué par :
   . un capteur (13) fabriqué selon le procédé défini à l'une quelconque des revendications 1 à 4 ,
   . des moyens (28, 29) d'alimentation du capteur en courant électrique,
   . des moyens de mesure (R) d'une caractéristique électrique de l'élément sensible du capteur représentative de la conductivite de cet element,
   . un four (18, 19) dans lequel le capteur est logé,
   . des moyens (22, 23, 24, 33) d'introduction dans le four et d'évacuation d'une partie de l'atmosphère à surveiller ,
   . des moyens de réglage (20, 24 - 27) de la température du four, à une valeur prédéterminee,
   - un deuxième ensemble identique au premier ensemble, les moyens de réglage de la température de l'un des ensembles étant capables de porter le capteur associé à une première température correspondant environ au pic se manifestant dans la relation entre la température et la conductivité en présence du gaz à détecter, et les moyens de réglage de l'autre des ensembles étant capables de porter le capteur associé à une seconde température plus élevée que la premiàre,
   - des moyens de comparaison (30) pour comparer les deux valeurs de la caractéristique electrique des capteurs desdits ensembles à la première et seconde température.

11. Dispositif selon la revendication 10 caractérisé en ce que les deux fours (18, 19) avec leurs capteurs (13) sont disposés dans une enceinte unique (17) comportant les moyens d'introduction (22, 24, 33) et d'évacuation (23, 24,33) d'une partie de l'atmosphère surveillée.

12. Capteur suspectible dêtre obtenu par le procédé défini à l'une quelconque des revendications 1 à 4.


### Patentansprüche

1. Verfahren zur Herstellung eines Fühlers zur Feststellung von Gasspuren oder gasförmigen Verunreinigungen ineiner zu überwachenden Atmosphäre durch Messung der elektrischen Leitfähigkeit eines Meßelementes (2, 7) des Fühlers (11, 12, 13), wobei man das Meßelement aus einem Metalloxyd der aus SnO$_2$ und NiO bestehenden Gruppe herstellt und wobei man das hergestellte Meßelement vor seiner Verwendung einer erhöhten Temperatur aussetzt, dadurch gekennzeichnet, daß die erhöhte Temperatur ungefähr 550°C beträgt und daß man das hergestellte Meßelement vor seiner Verwendung und bei derselben ungefähr 550°C betragenden erhöhten Temperatur einem Gasstrom aussetzt, der ein aktivierendes Gas der aus SO$_2$ und H$_2$S bestehenden Gruppe enthält.

6

2. Verfahren nach Anspruch 1, dadurch gekennzeichnet, daß man den Fühler (11, 12, 13) durch Sintern des Metalloxydes oder durch Aufbringen einer dünnen oder dicken Schicht desselben auf einen Keramikträger herstellt.

3. Verfahren nach Anspruch 1, dadurch gekennzeichnet, daß als Gasstrom Luft oder ein neutrales Gas verwendet wird, welches das aktivierende Gas in einer Konzentration von ca. 0,1% enthält.

4. Verfahren nach Anspruch 1, dadurch gekennzeichnet, daß die Behandlungsdauer des Fühlers (11, 12, 13) aus Metalloxyd in dem das aktivierende Gas enthaltenden Gasstrom ca. 30 Sek. bis 5 Min., vorzugsweise ungefähr 3 Min. beträgt.

5. Verfahren zum Feststellen von Gasspuren oder gasförmigen Verunreinigungen in einer zu überwachenden Atmosphäre durch Messung der elektrischen Leitfähigkeit eines Meßelementes (2, 7) eines Fühlers (11, 12, 13), der durch ein Verfahren nach einem der Ansprüche 1 bis 4 hergestellt wurde, dadurch gekennzeichnet, daß man den Fühler während der Zeit, in der er der zu überwachenden Atmosphäre ausgesetzt ist, zuerst auf eine erste Temperatur bringt, die ungefähr dem Pik entspricht, der in der Beziehung zwischen der Temperatur und der Leitfähigkeit des Meßelementes bei Gegenwart des festzustellenden Gases auftritt, daß man den Fühler anschliessend auf eine gegenüber der ersten Temperatur höhere zweite Temperatur bringt und daß man das Vorzeichen und vorzugsweise auch den Betrag der Differenz der entsprechenden Werte der Leitfähigkeit bei der ersten und der zweiten Temperatur mißt.

6. Verfahren zum Feststellen von Gasspuren oder gasförmigen Verunreinigungen in einer zu überwachenden Atmosphäre durch Messung der elektrischen Leitfähigkeit von Meßelementen (2, 7) zweier Fühler (13), die beide durch ein Verfahren nach einem der Ansprüche 1 bis 4 hergestellt wurden, dadurch gekennzeichnet, daß man die Meßelemente der zu überwachenden Atmosphäre aussetzt, daß man einen der Fühler auf eine erste Temperatur bringt, die ungefähr dem Pik entspricht, der in der Beziehung zwischen der Temperatur und der Leitfähigkeit der Meßelemente in Gegenwart des festzustellenden Gases auftritt, daß man den anderen Fühler auf eine gegenüber der ersten Temperatur höhere zweite Temperatur bringt und daß man das Vorzeichen und vorzugsweise auch den Betrag der Differenz der entsprechenden Werte der Leitfähigkeit der genannten Meßelemente bei der genannten ersten und zweiten Temperatur mißt.

7. Verfahren nach Anspruch 6, dadurch gekennzeichnet, daß man zwei identische Fühler (13) aus Metalloxyd verwendet und daß man gleichzeitig den einen auf eine der Temperaturen und den anderen auf die andere Temperatur bringt.

8. Verfahren nach einem der Ansprüche 5 bis 7, dadurch gekennzeichnet, daß die beiden Temperaturen einen Abstand in der Größenordnung von 100°C haben, wobei die niedrigüre der beiden Temperäturen ungefähr 100°C für $H_2S$, 200°C für $SO_2$; 400°C für Benzol, Pentan, 250°C bis 275°C für Tetrachlorkohlenstoff, Diäthyläther, Butylacetat, Butanol, Acetaldehyd, 300°C bis 325°C für Toluol, Chloroform, 325°C bis 350°C für Hexan, 375°C für Cyclohexan, 425°C für Butan und Ethylen beträgt.

9. Vorrichtung zur Durchführung eines Verfahrens nach Anspruch 5, umfassend:
- einen Fühler (13), der gemäß dem in einem der Ansprüche 1 bis 4 beschriebenen Verfahren hergestellt wurde,
- eine Einrichtung (28, 29) zur Stromversorgung des Fühlers,
- eine Meßeinrichtung (R) zur Messung einer charakteristischen elektrischen Größe des Meßelementes des Fühlers, die für die Leitfähigkeit dieses Elementes represäntativ ist,
- einen Ofen (18, 19), in dem der Fühler angeordnet ist,
- Mittel (22, 23, 24, 33) zum Einführen und Evakuieren eines Teiles der zu überwachenden Atmosphäre in den bzw. aus dem Ofen,
- eine Einrichtung (20, 24 bis 27) zur Regelung der Ofentemperatur, die dazu geeignet ist, den Fühler nacheinander auf zwei Temperaturwerte zu bringen, von denen der eine dem Pik entspricht, der in der Beziehung zwischen der Temperatur und der Leitfähigkeit in Gegenwart des festzustellenden Gases auftritt, und von denen der andere höher als der erstgenannte ist,
- eine Speichereinrichtung (34) zur Speicherung mindestens eines der bei den beiden Temperaturwerten erhaltenen Werte der charakteristischen Größe,
- eine Einrichtung (30) zum Vergleichen der beiden Werte.

10. Vorrichtung zur Durchführung eines Verfahrens nach Anspruch 6, umfassend:
- eine erste Anordnung bestehend aus:
. einem Fühler (13), der nach dem in einem der Ansürüche 1 bis 4 beschriebenen Verfahren hergestellt wurde,
.einer Einrichtung (28, 29) zur Stromversorgung des Fühlers,
. einer Meßeinrichtung (R) zur Messung einer charakteristischen elektrischen Größe des Meßelementes des Fühlers, die für die Leitfähigkeit dieses Elementes represäntativ ist,
. einem Ofen (18, 19), in dem der Fühler angeordnet ist,
. Mitteln(22, 23, 24, 33) zum Einführen und Evakuieren eines Teils der zu überwachenden Atmosphäre in den bzw. aus dem Ofen,
.einer Einrichtung (20, 24 bis 27) zur Regelung der Ofentemperatur auf einen vorbestimmten Wert,
- eine mit der ersten Anordnung identische zweite Anordnung, wobei die Einrichtung zur Regelung der Temperatur einer der beiden Anordnungen in der Lage ist, den zugehörigen Fühler auf einer ersten Temperatur zu halten, die ungefähr dem Pik entspricht, der in der Beziehung zwischen der Temperatur und der Leitfähigkeit bei Anwesenheit des festzustellenden Gases auftritt, und wobei die Regeleinrichtung der anderen Anordnung in der Lage ist, den zugehörigen Fühler auf einer gegenüber der ersten Temperatur höheren Temperatur zu halten,
- eine Vergleichseinrichtung (30), um die beiden Werte der charakteristischen elektrischen Größe der Fühler

7

der beiden Anordnungen bei der ersten und zweiten Temperatur miteinander zu vergleichen.

11. Vorrichtung nach Anspruch 10, dadurch gekennzeichnet, daß die beiden Öfen (18, 19) mit ihren Fühlern (13) in einer einzigen Hülle (17) angeordnet sind, die Mittel (22, 24, 33) und (23, 24, 33) zum Einführen bzw. Evakuieren eines Teiles der zu überwachenden Atmosphäre aufweist.

12. Fühler, der durch ein Verfahren nach einem der Ansprüche 1 bis 4 herstellbar ist.

## Claims

1. A method of manufacture of a sensor for the detection in an atmosphere which has to be monitored, of traces of gas or gaseous impurities by measurement of the electrical conductivity of a sensitive element (2, 7) in the sensor (11, 12, 13), in accordance with which the sensitive element is produced from a metallic oxide from the group consisting of $SnO_2$ and $NiO$ and in accordance with which the sensitive element so produced is subjected before being put into service, to a high temperature, characterized in that the high temperature is at most equal to about 550°C, and in that the sensitive element produced is exposed before being put into service and at the same high temperature at most equal to 550°C, to a flow of gas containing an activating gas from the group consisting of $80_2$ and $H_2S$.

2. A method as in Claim 1, characterized in that the sensor (11, 12, 13) is manufactured by sintering the metallic oxide or by covering a ceramic support with a thin or thick layer.

3. A method as in Claim 1, characterized in that the flow of gas is of air or a neutral gas containing the activating gas in a concentration of about 0.1%.

4. A method as in Claim 1, characterized in that the duration of the treatment of the sensor (11, 12, 13) of metallic oxide by the flow of gas containing the activating gas is of the order of from 30 seconds to 5 minutes, preferably of the order of 3 minutes.

5. A method of detection in an atmosphere which has to be monitored, of traces of gas or gaseous impurities by measurement of the electrical conductivity of the sensitive element (2, 7) in a sensor (11, 12, 13) manufactured in accordance with the method defined in any one of the Claims 1 to 4, being a method of detection in accordance with which the sensor while it is being exposed to the atmosphere being monitored, is brought first of all to a first temperature which corresponds with about the peak which appears in the relationship between the temperature and the conductivity of the sensitive element in the presence of the gas which is to be detected, and then to a second temperature higher than the first, and in accordance with which the sense of and preferably likswise the difference between the respective values of the conductivity at the first and second temperatures are measured.

6. A method of detection in an atmosphere which has to be monitored, of traces of gas or gaseous impurities by messurement of the electrical conductivity of the sensitive elements (2, 7) in two sensors (13) sach of which has been manufactured in accordance with the method defined in any one of the Claims 1 to 4, being a method of detection in accordance with which the said sensitive elements are exposed to the atmosphere which has to be monitored, one of the sensors is brought to a first temperature which corresponds with about the peak which appears in the relationship between the temperature and the conductivity of the sensitive elements in the presence of the gas which is to be detected, and the other sensor is brought to a second temperature higher than the first, and the sense of and preferably likewise the difference between the respective values of the conductivities of the said sensitive elements at the said first and second temperatures are measured.

7. A method as in Claim 6, characterized in that two identical metallic-oxide sensors (13) are employed and they are brought simultaneously, one to one of the temperatures and the other to the other temperature.

8. A method as in any one of the Claims 5 to 7, characterized in that the two temperatures have a difference of the order of 100°C, the lower of the two being about : 100°C for $H_2S$, 200°C for $SO_2$; 400°C for benzene or pentane, 250 to 275°C for carbon tetrachloride, diethylether, butyl acetate, butanol or acetaldehyde, 300 to 325°C for toluene or chloroform, 325 to 350°C for hexane, 375°C for cyclohexane, 425°C for butane or ethylene.

9. A device for putting into effect the method as in Claim 5, comprising:
- a sensor (13) manufactured in accordance with the method defined in any one of the Claims 1 to 4;
- means (28, 29) of feeding the said sensor with electric current;
- means of measurement (R) of an electrical characteristic of the sensitive element in the sensor, representative of the conductivity of the said element;
- a furnace (18, 19) in which the sensor is housed;
- means (22, 23, 24, 33) of introduction into and of exhaust from the furnace of a portion of the atmosphere which has to be monitored;
- means of regulation (20, 24-27) of the temperature of the furnace, the said means being suitable for bringing the sensor up to two temperatures in succession, one of which corresponds with about the peak which appears in the relationship between the temperature and the conductivity in the presence of the gas which is to be detected and the other of which is higher;
- means of storage (34) for storing at least one of the two values of the said electrical characteristic, which are obtained at each of the two temperatures;
- means of comparison (30) of the said two values.

10. A device for putting into effect the method as in Claim 6, comprising:

0 077 724

- a first group consisting of:
  . a sensor (13) manufactured in accordance with the method defined in any one of the Claims 1 to 4;
  . means (28, 29) of feeding the sensor with electric current;
  . means of measurement (R) of an electrical characteristic of the sensitive element in the sensor, representative of the conductivity of the said element;
  . a furnace (18, 19) in which the sensor is housed;
  . means (22, 23, 24, 33) of introduction into and of exhaust from the furnace of a portion of the atmosphere which has to be monitored;
  . means of regulation (20, 24-27) of the temperature of the furnace to a predetermined value;
- a second group identical with the first group, the means of regulation of the temperature of one of the groups being capable of bringing the associated sensor up to a first temperature which corresponds with about the peak which appears in the relationship between the temperature and the conductivity in the presence of the gas which is to be detected, and the means of regulation of the other group being capable of bringing the associated sensor up to a second temperature higher than the first;
- means of comparison (30) for comparing the two values of the electrical characteristic of the sensors of the said groups at the first and second temperatures.

11. A device as in Claim 10, characterized in that the two furnaces (18, 19) with their sensors (13) are arranged in a single enclosure (17) which includes the means of introduction (22, 24, 33) and of exhaust (23, 24, 33) of a portion of the atmosphere being monitored.

12. A sensor capable of being obtained by the method defined in any one of the Claims 1 to 4.

## Fig.1

## Fig.2

## Fig.3

$G(10^{-4})$

8

7

6

5

4

3

2

1

0

$C$

$D$

14

$G(500)$

$G(400)$

$B$

$A$

0    100    200    300    400    500    600    $(°C)$

1

Fig. 4

Fig. 5

0 077 724

## Fig:6